(19) **Europäisches Patentamt**
**European Patent Office**
**Office européen des brevets**

(11) **EP 4 648 615 B1**

(12) **EUROPEAN PATENT SPECIFICATION**

(45) Date of publication and mention
of the grant of the patent:
**01.07.2026  Bulletin 2026/27**

(21) Application number: **24700070.6**

(22) Date of filing: **10.01.2024**

(51) International Patent Classification (IPC):
*A21D 13/31* (2017.01)    *A21D 2/16* (2006.01)
*A21D 10/00* (2006.01)    *A21D 13/80* (2017.01)
*A21D 13/19* (2017.01)    *A21D 13/16* (2017.01)
*A21D 8/04* (2006.01)    *A23L 7/196* (2016.01)

(52) Cooperative Patent Classification (CPC):
**A21D 8/042; A21D 13/16; A21D 13/19;**
**A21D 13/31; A23L 7/1965**

(86) International application number:
**PCT/EP2024/050468**

(87) International publication number:
**WO 2024/149795 (18.07.2024 Gazette 2024/29)**

(54) **IMPROVED FILO DOUGH BASED PRODUCTS**

VERBESSERTE PRODUKTE AUF BASIS VON FILOTEIG

PRODUITS AMÉLIORÉS À BASE DE PÂTE FILO

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Validation States:
**MA MD**

(30) Priority: **10.01.2023  BE 202305009**

(43) Date of publication of application:
**19.11.2025  Bulletin 2025/47**

(73) Proprietors:
• **PURATOS N.V.**
**1702 Groot-Bijgaarden (BE)**

• **Banopuratos Factory Fze**
**Sharjah (AE)**

(72) Inventors:
• **KAWWA, Achraf**
**DUBAI (AE)**
• **DE RUYTER, Kevin**
**8210 Loppem (BE)**

(74) Representative: **De Clercq & Partners**
**Edgard Gevaertdreef 10a**
**9830 Sint-Martens-Latem (BE)**

(56) References cited:
**WO-A1-2007/058659      WO-A1-2018/011117**
**WO-A1-2018/011118      US-A1- 2021 212 327**

**Description**

**FIELD OF THE INVENTION**

The invention relates to the improvement of the product characteristics and eating qualities of filo dough based products, such as Arabic Sweets, made from flour as a base of the dough.

**BACKGROUND OF THE INVENTION**

Baklava is one of the most popular Arabic sweets. Baklava is made of a stack of very thin unleavened dough sheets, also referred to as filo or phyllo dough, which are usually separated by a layer of animal ghee that enrobes a sweet or savoury filling, particularly a nut-based filling like pistachio, pine, almond or walnuts. In addition to pastries such as baklava, there are many other pastries based on filo doughs or on very thin unleavened doughs, such as Banitsa, Börek, Bougatsa, Bülbül yuvasi, Bundevara, Flia, Galaktoboureko, Gibanica, Pastizz, Spanakopita, Tiropita or Zelnik in Middle Eastern, Greek or Balkan cuisines.

Filo dough based pastries are typically made by layering many sheets of filo brushed with oil or butter; and subsequently baking the pastry. The origin of the practice of stretching raw dough into paper-thin sheets is unclear, with many cultures claiming credit.

A baklava or filo dough needs a good extensibility in order to be processed in soft delicious products. In addition, these products are commonly stored for a prolonged time and need to keep their taste and texture during the full shelf-life.

Traditionally, the thin dough sheets used in baklava or filo dough are made with flour, water, and a small amount of oil. Homemade filo dough preparation takes time and skill, requiring progressive rolling and stretching to a single thin and very large sheet. A very big table is used, preferably with a marble top. If the dough is stretched by hand, a long, thin rolling pin is used, with continual starch flouring between layers to prevent the sheets from sticking to one another. In cases where extra starch remains stuck between the dough layers, the quality of the final product deteriorates due to the fact that the remaining starch will absorb the ghee and the sugar syrup. The products after baking become soggy in texture and lose their crispiness and their shiny look. For this reason, the baklava makers always need to brush the excess starch between the dough layers before applying the ghee to avoid sogginess and to ensure good drainage of the excess sugar syrup before packing. Proper brushing of starches is not always an easy task as the starches usually stick and become embedded in the dough itself due to poor cohesiveness, poor dough development and system instability resulting from the stress created from the presence of oil and water inside the dough system.

In modern times, mechanical rollers are also used. Fresh and frozen versions are prepared for commercial markets. Moreover, many commercial industrial producers are utilizing the technology of dough extrusion into a thin layer of dough sheet that light can pass through and thus require a specific dough rheology in order to extend the dough while at the same time keeping it cohesive. In order to process the dough on the line conveyors, more dusting starch is used and there is thus an increased risk of sogginess as well as dough dryness over the shelf life.

Therefore, there is a need to provide improved compositions and processes to ensure obtaining Arabic sweets and other filo dough based products with superior visual, eating and storage qualities.

WO 2018/011118 A1 discloses a combination of a thermophilic serine protease and monoglycerides which is able to improve the short bite in bakery products.

**SUMMARY OF THE INVENTION**

The inventors have developed improved compositions and methods for the preparation of filo dough sheets and filo dough based baked products that overcome the limitations and disadvantages of the known compositions and methods. The inventors have surprisingly found that the simultaneous use of a sufficient amount of a specific type of monoglycerides and a sufficient dosage of specific enzymes when preparing the filo dough before baking/frying shows an unexpected positive/synergistic effect on the properties of the filo dough sheets and of the dough based baked products, such as Arabic sweets, made with them. More particularly, the methods and compositions of the present invention allow to obtain an increased dough extensibility without tearing of the dough sheets, a decreased amount of starch residues between dough layers due to lower starch adsorption, an easier slicing and smoother cutting, and an improved crispiness, cohesiveness and shininess of the filo dough based products, such as Arabic sweets.

A first aspect of the present invention provides a method to obtain a filo dough sheet, wherein the method comprises the steps of:

(a) preparing a dough comprising

- flour, water,

- one or more monoglycerides, wherein the one or more monoglycerides have an iodine value lower or equal to 5.0 and, when the one or more monoglycerides are in powder form, wherein at least 70.0% of said one or more monoglycerides have a particle size lower than 200 $\mu$m,
- at least one protease enzyme,
- at least one lipase enzyme,
- optionally oil,
- optionally eggs and/or milk powder, and,
- optionally one or more reducing agents;

(b) optionally resting the dough, and
(c) flattening and/or extruding the dough, thereby obtaining the filo dough sheet.

More in particular, the filo dough sheet has a thickness of between 0.5 to 2.5 mm, preferably between 0.5 and 2.0 mm.

In particular embodiments, the one or more monoglycerides are in powder form, wherein at least 70.0% of said one or more monoglycerides have a particle size lower than 150 $\mu$m.

In particular embodiments, the protease enzyme is a thermophilic serine protease enzyme, more in particular having an optimum activity at a temperature higher than 70.0°C, preferably at a temperature higher than 75.0°C and more preferably at a temperature higher than 80.0°C. In particular embodiments, the lipase enzyme is a phospholipase enzyme, preferably a phospholipase A enzyme, more preferably a phospholipase A1 enzyme.

In particular embodiments, the one or more monoglycerides are present in the dough in an amount between 100 and 2000 g/100 kg flour; and/or the at least one protease enzyme is a thermophilic serine protease enzyme present in the dough in an amount between 30 and 1000 protease units/100 kg flour; and/or the at least one lipase enzyme is a phospholipase enzyme present in the dough in an amount between 2300 and 60000 phospholipase units/100 kg flour.

In a particular embodiment of the method according to the present invention, the method comprises the steps of

(a) preparing a dough, wherein the dough comprises, expressed on flour weight:

- 100 wt% flour, preferably flour having a P/L ratio between 0.5 and 3, even more preferably flour having a P/L ratio between 0.5 and 2;
- 45.0-65.0 wt% water;
- one or more monoglycerides, preferably wherein said monoglycerides are saturated monoglycerides in powder form, having an iodine value lower or equal to 5.0, and wherein at least 70.0% of the monoglycerides in powder form have a particle size between 50 and 200 $\mu$m, in an amount between 100 and 2000 g/100 kg flour;
- at least one protease enzyme, preferably wherein said protease enzyme is a thermophilic serine protease enzyme, in an amount between 30 and 1000 protease units/100 kg flour;
- at least one lipase enzyme, preferably wherein said lipase enzyme is a phospholipase enzyme, in an amount between 2300 and 60000 phospholipase units/100 kg flour;
- optionally 0-5 wt% oil, particularly 2-5 wt% oil;
- optionally 0-10 wt% eggs and/or milk powder, particularly 4-10 wt% eggs and/or milk powder; and;
- optionally a reducing agent, wherein when said reducing agent is sodium metabisulphite, it is present in an amount between 1.0 and 10.0 g / 100 kg of flour, particularly between 2.5 and 5.0 g / 100 kg of flour, or when said reducing agent is deactivated yeast, it is present in an amount between 500 and 1500 g / 100 kg of flour;

(b) optionally resting the dough between 0 min and 16 hours or overnight, and
(c) flattening and/or extruding the dough, thereby obtaining a filo dough sheet with thickness between 0.5 and 2.5 mm.

A second aspect of the present invention provides a method to obtain a filo dough based baked product, such as baklava, comprising the steps of:

(i) preparing a filo dough sheet according to a method of the present invention;
(ii) stacking between 1 and 30 layers of filo dough sheets, preferably between 15 and 25 layers, while applying fat between each layer; thereby obtaining a stack of filo dough layers;
(iii) adding a savoury or sweet filling on top of a first stack of filo dough layers;
(iv) adding a second stack of filo dough layers on top of the savoury or sweet filing, thereby obtaining an aggregated stack of filo dough layers and filling;
(v) cutting the aggregated stack of filo dough layers and filling in pieces;
(vi) soaking the pieces in fat;

(vii) baking the pieces;
(viii) optionally soaking the baked pieces in sugar syrup, and
(ix) optionally packing the products.

In particular embodiments, the savoury or sweet filling is a nut based filling, a cheese based filling a legume/-vegetable base filing or a meat based filling.

More in particular, the filo dough based product, preferably the baklava, has a shiny appearance and improved crispiness after at least 21 days of storage compared to a reference filo dough based product prepared without the one or more monoglycerides, the at least one protease enzyme and the at least one lipase enzyme, as evaluated by a panel of professional experts in sensorial evaluation. Stated differently, in certain embodiments, the method is a method for improving the crispiness of a filo dough based product, preferably a baklava product.

A further related aspect of the present invention provides a filo dough sheet, particularly having a thickness between 0.5 and 2.5 mm, comprising

- flour, water,
- one or more monoglycerides, wherein the one or more monoglycerides have an iodine value lower or equal to 5.0 and, when the one or more monoglycerides are in powder form, wherein at least 70.0% of said one or more monoglycerides have a particle size lower than 200 $\mu$m;
- at least one protease enzyme, particularly a thermophilic serine protease enzyme;
- at least one lipase enzyme,
- optionally oil,
- optionally eggs and/or milk powder, and,
- optionally one or more reducing agents.

In particular, said filo dough sheet is obtained by the method as described herein.

In particular, the one or more monoglycerides are present in the dough in an amount between 100 and 2000 g/100 kg flour; and/or the at least one protease enzyme is a thermophilic serine protease enzyme, and is present in the dough in an amount between 30.0 and 1000.0 protease units/100 kg flour; and/or the at least one lipase enzyme is a phospholipase enzyme and is present in the dough sheet in an amount between 2300 and 60000 phospholipase units/100 kg flour.

A further related aspect of the present invention provides an improver composition, preferably a powdered composition, comprising:

- one or more monoglycerides, preferably wherein said monoglycerides are saturated monoglycerides in powder form, having an iodine value lower or equal to 5, and wherein at least 70% of the monoglycerides in powder form have a particle size between 50 and 200 $\mu$m;
- at least one protease enzyme, preferably wherein said protease enzyme is a thermophilic serine protease enzyme;
- at least one lipase enzyme, preferably wherein said lipase enzyme is a phospholipase enzyme;

wherein the protease enzyme is present in the improver composition in an amount between 0.01 and 10.0 units per g of said one or more monoglycerides; and
wherein the lipase enzyme is present in the improver composition in an amount between 1 and 600 units per g of said one or more monoglycerides.

Yet another further related aspect of the present invention provides the use of a dough sheet according to the present invention or use of an improver composition according to the present invention, for the preparation of filo dough based products, particularly for the preparation of filo dough based products which maintain their appearance and crispiness for at least 21 days, as evaluated by a panel of professional experts in sensorial evaluation.

## DESCRIPTION

Before the present methods, compositions and devices used in the invention are described, it is to be understood that this invention is not limited to particular methods, compositions, components, or devices described, as such methods, compositions, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any method and material similar or equivalent to those described herein may be used in practice or testing of the present invention, the preferred methods and materials are now described.

In this specification and the appended claims, the singular forms "a", "an", "the" include both the singular and the plural, unless the context clearly indicates otherwise.

The terms "comprising", "comprises" and "comprised of" as used herein are synonymous with "including", "includes" or "containing", "contains", and are inclusive or open-ended and do not exclude additional, non-recited members, elements or method steps. Where this description refers to a product or process which "comprises" specific features, parts or steps, this refers to the possibility that other features, parts or steps may also be present, but may also refer to embodiments which only contain the listed features, parts or steps. The terms "comprising", "comprises" and "comprised of" also include the term "consisting of".

The enumeration of numeric values by means of ranges of figures comprises all values and fractions in these ranges, as well as the cited end points.

The terms "about" and "approximately" as used when referring to a measurable value, such as a parameter, an amount, a time period, and the like, is intended to include variations of +/-10% or less, preferably +/-5% or less, more preferably +/-1% or less, and still more preferably +/-0.1% or less, of and from the specified value, in so far as the variations apply to the invention disclosed herein. It should be understood that the value to which the term "about" or "approximately" refers per se has also been disclosed.

The inventors have surprisingly found that the simultaneous use of a specific type of monoglycerides, specific enzymes and, optionally, a reducing agent in a filo dough before baking/frying shows an unexpected positive/synergistic effect on the properties of thin dough sheets and of the baked products, in particular Arabic sweets, made with them. More particularly, the methods and compositions of the present invention allow to obtain an increased dough extensibility without tearing of the dough sheets, a decreased amount of starch residues between dough layers due to lower starch adsorption, an easier slicing and smoother cutting, and an improved crispiness, cohesiveness and shininess of the filo dough based products, such as Arabic sweets. In this context, the present invention generally provides methods to obtain a filo dough sheet or to obtain a filo dough based baked product, comprising the addition of a combination of monoglycerides, protease(s) and lipase(s) to the dough. The present invention further generally provides improver compositions and filo dough sheets comprising the combination of monoglycerides, protease(s) and lipase(s).

In the context of the present invention, the terms "filo dough" or "thin/very thin dough" are used interchangeably herein. A filo dough is a very thin dough, characterized by a mean thickness of 0.5 to 2.5mm, preferably between 0.5 and 2.0 mm, more preferably between 0.5 and 1.5 mm. Dough thickness may be measured for example with a micrometre. The skilled person will also understand that the right thickness of a filo dough or sheeted dough is obtained when light pass easily through the dough. This can be checked for example by the ability to read a text through the dough.

In a first aspect, the present invention relates to a method to obtain a filo dough sheet or a very thin dough sheet, wherein the method comprises the steps of:

(a) preparing a dough comprising

- flour, water;
- one or more monoglycerides, wherein the one or more monoglycerides have an iodine value lower or equal to 5.0 and, when the one or more monoglycerides are in powder form, wherein at least 70.0% of said one or more monoglycerides have a particle size lower than 200 $\mu$m;
- at least one protease enzyme, in particular a thermophilic serine protease;
- at least one lipase enzyme, in particular a phospholipase;
- optionally oil,
- optionally eggs and/or milk powder, and,
- optionally one or more reducing agents;

(b) optionally resting the dough, and
(c) flattening and/or extruding the dough, thereby obtaining the filo dough sheet.

In particular embodiments, the method comprises the steps of:

(a) preparing a dough comprising

- flour, water,
- one or more monoglycerides, wherein the one or more monoglycerides have an iodine value lower or equal to 5.0, wherein the one or more monoglycerides are in powder form, and wherein at least 70.0% of said one or more monoglycerides have a particle size lower than 200 $\mu$m,
- at least one protease enzyme, wherein said protease enzyme is a thermophilic serine protease enzyme having an optimum activity at a temperature higher than 70.0°C,

- at least one lipase enzyme, wherein said lipase enzyme is a phospholipase enzyme,
- optionally oil,
- optionally eggs and/or milk powder, and,
- optionally one or more reducing agents;

(b) optionally resting the dough, and
(c) flattening and/or extruding the dough, thereby obtaining the filo dough sheet.

As used herein, the term "monoglycerides" refers generally to a class of glycerides which are composed of a molecule of glycerol linked to a fatty acid via an ester bond.

Monoglycerides are one of the many types of emulsifiers used in bakery applications: among these are monoglycerides (or mixtures of monoglycerides and diglycerides; referred as E471 by the International Numbering System for Food Additives (INS) or as 184.1505 by the US Food and Drug Agency), monoglycerides derivatives (as for example succinylated, lactylated or acetylated monoglycerides, diacetyl tartaric acid esters of monoglycerides (DATEM), glycerol monostearate (GMS), propylene glycol monoester, ...), sorbitan emulsifiers (sorbitan monostearate), polysorbates, sodium stearoyl lactylate (SSL), polyglycerol esters, sucrose esters and lecithin.

In the context of the present invention, the monoglycerides (E471) are saturated or fully hydrogenated monoglycerides with an iodine value below 5, such as between 0 and 5, preferably below 2.5 or between 0 and 2.5, more preferably lower or equal to 2 or between 0 and 2. In the context of the present invention the iodine value is advantageously determined using an assay derived from the method of Wijs - Hoffmann - Green as described herein. In a particular embodiment, the monoglycerides are added in powder form to the dough and, in this case, at least 70% of the monoglycerides have a particle size lower than 200 $\mu$m, such as between 50 $\mu$m and 200 $\mu$m, preferably lower than 160 $\mu$m, more preferably lower than 120 $\mu$m. In the context of the present invention the particle size is advantageously determined by laser diffraction method as described herein.

In particular embodiments, the monoglycerides are advantageously added to or present in the dough in a concentration between 100 and 2000 g / 100 kg of flour, preferably between 200 and 1500 g / 100 kg of flour, more preferably between 300 and 800 g / 100 kg of flour.

As used herein, the term "protease" refers generally to enzymes that hydrolyse the peptide bonds that link amino acids together in a polypeptide chain preferably as defined by enzyme classification entry EC 3.4, and are also referred to as peptidases or proteinases. They are classified in several classes according to their catalytic residues. Among these classes, serine proteases (or serine endopeptidases) are proteases that cleave peptide bonds in proteins, in which serine serves as the nucleophilic amino acid at the active site. Serine proteases are defined by enzyme entry EC 3.4.21. Serine proteases may be further sub classified according to their substrate specificity as trypsin-like, chymotrypsin-like, thrombin-like, elastase-like or subtilisin like. In the context of the present invention, the protease activity is measured using azurine crosslinked casein (AZCL-casein) as a substrate, particularly at pH 7.0 and 60°C. Hydrolysis by proteases produces water soluble dyed fragments, and the rate of release of these fragments, by measuring the increase in absorbance at 590 nm, can be related directly to enzyme activity (Protazyme AK Tablets, Megazyme, Ireland). In this context, the protease activity, expressed in units or protease units, is determined according to the formula:

Protease activity in milliunits)/ml = (34.2 * (Abs$_{590}$ enzyme - Abs$_{590}$ blank) + 0.6) / dilution.

More details on the protease activity measurement are given in the examples.

The protease activity can also be measured with other assays for protease activity known by persons skilled in the art. Among these is the colorimetric method using casein as substrate followed by the detection of the released amino acids with the Folin & Ciocalteu's Phenol reagent.

In the context of the present invention, the protease is particularly a thermophilic serine protease, more in particular a thermophilic serine protease having an optimum activity at a temperature higher than 70°C, preferably at a temperature higher than 75°C and more preferably at a temperature higher than 80°C. Stated differently, the activity of the thermophilic serine protease obtains a maximum value at a temperature higher than 75°C and more preferably at a temperature higher than 80°C. More in particular, the protease is a thermophilic serine protease wherein the ratio between the protease activity at optimum temperature (i.e. the temperature corresponding to the maximum activity value) and the protease activity at 25°C is higher than 10, preferably higher than 15. By providing that said ratio is higher than 10, the thermophilic serine protease as used herein provides improved effects on the properties of the dough and the baked products, in particular Arabic sweets.

The protease may be obtained by extraction from naturally-occurring eukaryotic or prokaryotic organisms, by synthesis or by genetic engineering. In a particular embodiment, the protease is a neutral or an alkaline thermophilic serine protease. While fungal proteases are sensitive to high temperatures, bacterial neutral and alkaline proteases are more resistant to higher heat treatments.

Examples of suitable proteases are Taq proteases or thermitases. In the context of the present invention, the protease is particularly a Taq protease, preferably isolated from *Thermus aquaticus,* preferably aqualysin I or aqualysin II, more preferably aqualysin I, and even more preferably aqualysin I isolated from *Thermus aquaticus* LMG8924.

In particular embodiments, the protease, particularly the thermophilic serine protease, is advantageously present in or added to the dough in an amount of 30 to 1000 protease units / 100 kg of flour, preferably at 50 to 600 protease units / 100 kg of flour, more preferably at 100 to 200 protease units / 100 kg of flour, the enzyme activity being obtained using the method described herein, particularly wherein the protease activity is measured on azurine crosslinked casein as substrate using the method described in example 1.

In the context of the present invention, the lipase is particularly a phospholipase, more preferably a phospholipase A, even more preferably a phospholipase A1.

As used herein, the term "phospholipase" refers generally to enzymes that hydrolyse phospholipids into fatty acids and other lipophilic substances like for example lysophospholipids, diacylglycerols, choline phosphate and phosphatidates, depending on the site of hydrolysis. Depending on the specific bond targeted in the phospholipid molecule, phospholipases are classified in different types such as A, B, C and D.

As used herein, the term "phospholipase A" refers to lipolytic enzymes that catalyse the hydrolysis of one or more bonds in phospholipids. Two different types of phospholipase A activity can be distinguished which hydrolyse the ester bond(s) that link the fatty acyl moieties to the glycerol backbone. Phospholipase A1, as defined by enzyme entry EC 3.1.1.32, and Phospholipase A2, as defined by enzyme entry EC 3.1.1.4, catalyse the deacylation of one fatty acyl group in the sn-1 and sn-2 positions respectively, from a diacylglycerophospholipid to produce lysophospholipid. Phospholipase activity may be assayed using different methods such as Phospholipase Activity Assay Kit (Colorimetric, Abcam), Secretory Phospholipase Activity Assay Kit (Fluorometric, Abcam), EnzChek® Phospholipase A1/A2 Assay Kit (Life Technologies). Preferably, the phospholipase activity may be measured using 1,2-Dioleoyl-sn-glycero-3-phospho-rac-1-glycerol (DOPG) as substrate. The release of free fatty acid due to hydrolysis of 1,2-Dioleoyl-sn-glycero-3-phospho-rac-1-glycerol by phospholipase is measured by spectrophotometry at 550nm, against a calibration curve established by using different concentrations of oleic acid. One phospholipase activity unit (NefU) is defined as the amount of enzyme needed to release 1 nmol of free fatty acid per minute at 30°C and pH7.5.

In a particular embodiments, the lipase, particularly the phospholipase is present in or added to the dough in an amount of 2300 to 60000 phospholipase units / 100 kg of flour, preferably at 3450 to 48000 phospholipase units / 100 kg of flour, more preferably at 4600 to 36000 phospholipase units / 100 kg of flour, the enzyme activity being obtained using the method described herein, particularly wherein the phospholipase activity is measured using 1,2-Dioleoyl-sn-glycero-3-phospho-rac-1-glycerol as substrate using the method as described in example 1.

In the context of the present invention, the flour may be any flour suitable for baking. Preferably the flour is wheat flour. More preferably the flour is a wheat flour that has a resistance extensibility ratio (P/L) between 0.5 and 3, even more preferably is a wheat flour that has a resistance extensibility (P/L) ratio between 0.5 and 2. A P/L ratio below 1 is particularly preferred. The P/L ratio of a particular flour may be adjusted to a value below 1 by the addition of a reducing agent, as further discussed herein. The P/L is advantageously measured by an alveograph test, in particular an alveograph test according to AACC International Method 54-30.1999 or ICC Standard No. 121.1992. In such a test the P value is the maximum pressure required for the deformation of a dough sample or overpressure. The P-value is graphically seen as the height of the peak and is related to the resistance of the dough to deformation (tenacity). The L value is the maximum amount of air the bubble in the sample dough is able to contain. L-value is graphically seen as the length of the alveograph curve or distance at which the bubble ruptures, an indication of dough extensibility.

In the context of the present invention, the filo dough may be prepared with or contain one or more optional ingredients, such as oil, eggs and/or milk powder, and/or a reducing agent.

In the context of the present invention the oil may be any type of vegetable oil. Preferably the oil is chosen from sunflower oil, canola oil, rapeseed oil or olive oil. More preferably the oil is sunflower oil.

In the context of the present invention, the reducing agent is an ingredient that reduces the number of cross-links between the gluten subunits in a dough during mixing. In the method as disclosed herein the reducing agent may be any reducing agent suitable for use in food application, more particularly in bakery or patisserie applications. Non-limiting examples of suitable reducing agents may be chosen among cysteine (L-cysteine), glutathione, deactivated (non-leavening) yeast and sulphites (sodium metabisulfite). The skilled person knows that the type of reducing agent may be chosen according to the process used. For example, sodium metabisulphite, a more powerful dough relaxing agent, is generally used on (straight) extrusion lines whereas L-cysteine or deactivated yeast, being less aggressive, are more commonly used in semi-automated process, avoiding the destruction of the dough gluten network during the overnight resting.

In a particular embodiment, the reducing agent is sodium metabisulphite and is present in or added to the dough in an amount between 1.0 and 10 g / 100 kg of flour, particularly between 2.5 and 5.0 g / 100 kg flour, or the reducing agent is deactivated yeast and is present in or added to the dough in an amount between 500 and 1500 g / 100 kg of flour.

In a particular embodiment of the method according to the present invention, the method comprises the steps of

(a) preparing a dough, wherein the dough comprises, expressed on flour weight:

- 100 wt% flour, particularly a flour with a P/L ratio between 0.5 and 3, more particularly a flour with a P/L ratio between 0.5 and 2, such as below 1, particularly wherein the P/L ratio is determined as described elsewhere herein, more particularly wherein the P/L ratio is determined with an alveograph test according to AACC International Method 54-30.1999 or ICC Standard No. 121.1992;
- 45.0-65.0 wt% water;
- one or more monoglycerides, wherein said monoglycerides are saturated monoglycerides in powder form, having an iodine value lower or equal to 5.0, and wherein at least 70.0% of the monoglycerides in powder form have a particle size between 50 and 200 $\mu$m, in an amount between 100 and 2000 g/100 kg flour;
- at least one protease enzyme, preferably wherein said protease enzyme is a thermophilic serine protease enzyme, particularly having an optimum activity at a temperature higher than 70.0°C, more preferably wherein said protease is a Taq protease, such as *Thermus aquaticus* aqualysin I or aqualysin II, in an amount between 30 and 1000 protease units/100 kg flour, wherein the protease activity is measured on azurine crosslinked casein as substrate using the method as described in example 1;
- at least one lipase enzyme, preferably wherein said lipase enzyme is a phospholipase enzyme, such as a phospholipase A enzyme, in an amount between 2300 and 60000 phospholipase units/100 kg flour, wherein the phospholipase activity is measured using 1,2-Dioleoyl-sn-glycero-3-phospho-rac-1-glycerol as substrate using the method as described in example 1;
- optionally 0-5 wt% oil, particularly 2-5 wt% oil;
- optionally 0-10 wt% eggs and/or milk powder, particularly 4-10 wt% eggs and/or milk powder; and;
- optionally a reducing agent, wherein when said reducing agent is sodium metabisulphite, it is present in an amount between 1.0 and 10.0 g / 100 kg of flour, particularly between 2.5 and 5.0 g / 100 kg of flour, or when said reducing agent is deactivated yeast, it is present in an amount between 500 and 1500 g / 100 kg of flour;

(b) optionally resting the dough between 0 min and 16 hours or overnight, and
(c) flattening and/or extruding the dough, thereby obtaining a filo dough sheet with thickness between 0.5 and 2.5 mm.

In the methods of the present invention, the ingredients of the dough are mixed in any order by any method known in the art, including hand mixing and mechanical mixing.

In the method of the present invention the dough is preferably allowed to rest for a period between 0 min and 16 hours, preferably between 0 min and 6 hours, such as overnight.

In the methods of the present invention, after the optional resting step, the dough is processed to a very thin dough or filo dough, as defined elsewhere herein. The very thin dough may be obtained by any process well known in the art. Very thin dough sheets may be obtained by manual or mechanical processing. In manual processing dough balls are generally stretched by hand using a long, thin rolling pin, with continual starch flouring between layers to prevent the sheets from sticking to one another. In semi-automatic processing the dough is divided into balls of specific weight, flattened and optionally rested in chilled conditions overnight. Afterwards the doughs are stacked one on top of the other with starch between each of them and then sheeted using a semi-automatic dough sheeter. In fully automated processing the dough is directly transferred into a hopper and processed on an extrusion line to form a continuous thin dough sheet that is rolled up on big dough rollers and processed directly into makeup lines for use in Arabic sweet filled trays.

In the context of the present invention, the starch may be any type of starch. Preferably the starch is wheat starch. More preferably the starch is native wheat starch (i.e. starch that has not been enzymatically, physically or chemically treated).

in certain embodiments, the methods as envisaged herein are methods for improving the crispiness of a filo dough based product, preferably a baklava product.

The combination of monoglycerides, protease and lipase, and, optionally, a reducing agent, as envisaged in the present invention may be in the form of or may be part of an improver composition. An "improver" or "improver composition" (also referred to as "bread improver", "Arabic sweets improver", "dough conditioner", "dough improver" or "improving agent" or "flour treatment agent") is typically added to the dough before/during the baking process in order to improve texture, volume, flavour and freshness of the baked product as well as to improve machinability and stability of the dough.

Accordingly, a further aspect of the present invention provides an improver composition comprising the one or more monoglycerides, the protease and the lipase, and, optionally, a reducing agent, as specified elsewhere herein. The present invention thus further provides for an improver composition comprising (a) one or more monoglycerides, preferably wherein said monoglycerides are saturated monoglycerides in powder form, having an iodine value lower than or equal to 5, preferably lower than or equal to 2.5 or 2.0, and wherein at least 70% of the monoglycerides in powder form have a particle size between 50 and 200 $\mu$m; (b) at least one protease enzyme, preferably wherein said protease enzyme is a thermophilic serine protease enzyme; and (c) at least one lipase enzyme, preferably wherein said lipase enzyme is a phospholipase enzyme. More in particular, the protease enzyme, particularly the thermophilic serine protease, is present in the improver composition in an amount between 0.01 and 10.0 protease units per g of said one or more monoglycerides; and/or the lipase enzyme, particularly the phospholipase, is present in the improver composition in an amount between 1 and 600 phospholipase units per g of said one or more monoglycerides.

In a preferred embodiment, the improver composition in powder form comprises:

- one or more monoglycerides, wherein said monoglycerides are saturated monoglycerides in powder form, having an iodine value lower or equal to 5, and wherein at least 70% of the monoglycerides in powder form have a particle size between 50 and 200 $\mu$m;
- at least one protease enzyme; wherein said protease enzyme is a thermophilic serine protease enzyme having an optimum activity at a temperature higher than 70.0°C;
- at least one lipase enzyme, wherein said lipase enzyme is a phospholipase enzyme;

  wherein the protease enzyme is present in the improver composition in an amount between 0.01 and 10.0 protease units per g of said one or more monoglycerides; and
  wherein the lipase enzyme is present in the improver composition in an amount between 1 and 600 phospholipase units per g of said one or more monoglycerides;
  wherein the protease activity is measured on azurine crosslinked casein as substrate using the method described in example 1 and wherein the phospholipase activity is measured using 1,2-Dioleoyl-sn-glycero-3-phospho-rac-1-glycerol as substrate using the method described in example 1.

Optionally, the improver composition may comprise a reducing agent, particularly wherein the reducing agent is sodium metabisulphite or deactivated yeast.

In certain embodiments, the improver composition according to the present invention, as used in the method described herein, may further comprise appropriate amounts of one or more additional enzymes (such as e.g. amylases, xylanases, oxidases, lipoxygenases, dehydrogenases and laccases), one or more lipid materials (such as e.g. margarine, butter, oil, shortening), one or more vitamins (such as e.g. pantothenic acid and vitamin E), one or more gums, and/or one or more sources of fibre (such as e.g. oat fibre).

In particular embodiments, the improver composition is in powdered form.

The methods for preparing a filo dough sheet according to the present invention result in a filo dough that shows improved properties when compared to a dough not comprising the particular combination of ingredients (i.e. monoglycerides, protease, lipase, and, optionally, a reducing agent). The dough pieces produced after mixing the dough are very smooth, homogeneous, have a silky appearance and can be easily rolled. The sheeted doughs have a strong tenacity and can be easily clean cut. Moreover, the sheeted doughs do not absorb the powdered starches that are dusted between the layers. This allows an easy brushing of the starches before further processing of the doughs (ghee soaking step).

Accordingly, another related aspect of the present invention provides a filo dough sheet, particularly having a thickness between 0.5 and 2.5 mm, more particularly between 0.5 and 2.0 mm, even more particularly between 0.5 and 1.5 mm, obtained according to a method according to the present invention. The filo dough sheet comprises flour; water; one or more monoglycerides as specified elsewhere herein, wherein the one or more monoglycerides have an iodine value lower or equal to 5.0, preferably wherein the one or more monoglycerides are in powder form and wherein at least 70% of said one or more monoglycerides have a particle size lower than 200 $\mu$m, such as between 50 and 200 $\mu$m; at least one protease enzyme, preferably a thermophilic serine protease enzyme as specified elsewhere herein; at least one lipase enzyme, preferably a phospholipase enzyme, as specified elsewhere herein; optionally oil; optionally eggs and/or milk powder; and, optionally a reducing agent.

In particular embodiments, the one or more monoglycerides as specified elsewhere herein are present in the dough in an amount between 100 and 2000 g/100 kg flour, preferably between 200 and 1500 g / 100 kg of flour, more preferably between 300 and 800 g / 100 kg of flour; and/or the at least one protease enzyme as specified elsewhere herein is present in the dough in an amount between 30.0 and 1000.0 protease units/100 kg flour, preferably at 50 to 600 protease units / 100 kg of flour, more preferably at 100 to 200 protease units / 100 kg of flour; and/or the at least one lipase enzyme as specified elsewhere herein is present in the dough sheet in an amount between 2300 and 60000 phospholipase units/100 kg flour, preferably at 3450 to 48000 phospholipase units / 100 kg of flour, more preferably at 4600 to 36000 phospholipase units / 100 kg of flour, with the enzyme activities as detailed elsewhere herein. Optionally, the reducing agent is sodium metabisulphite and is present in the dough in an amount between 1.0 and 10 g / 100 kg of flour, particularly between 2.5 and 5.0 g / 100 kg flour, or the reducing agent is deactivated yeast and is present in the dough an amount between 500 and 1500 g / 100 kg of flour.

The doughs of the present invention are particularly suited for preparing filo dough based pastries and related baked products. Non-limiting examples of such pastries are Baklava, Banitsa, Börek , Burma, Bougatsa, Bülbül yuvasi, Bundevara, Flia, Galaktoboureko, Gibanica, Pastizz, Spanakopita, Tiropita or Zelnik. In the context of the present invention the term pastry refers to any baked product comprising a filling enrobed by a filo type dough.

Accordingly, another related aspect of the present invention provides for a method to obtain a filo dough based product or filo dough pastry product as envisaged herein, wherein the method comprises the steps of:

(i) preparing a filo dough sheet according to a method of the present invention, particularly by (a) preparing a dough particularly comprising flour; water; one or more monoglycerides, particularly wherein said monoglycerides are saturated monoglycerides in powder form, having an iodine value lower or equal to 5.0, and wherein at least 70.0% of the monoglycerides in powder form have a particle size between 50 and 200 $\mu$m, particularly in an amount between 100 and 2000 g/100 kg flour; at least one protease enzyme, preferably wherein said protease enzyme is a thermophilic serine protease enzyme, particularly in an amount between 30 and 1000 protease units/100 kg flour; at least one lipase enzyme, preferably wherein said lipase enzyme is a phospholipase enzyme, particularly in an amount between 2300 and 60000 phospholipase units/100 kg flour; optionally oil; optionally 0-10 wt% eggs and/or milk powder; and optionally a reducing agent; (b) optionally resting the dough between 0 min and 16 hours or overnight, and (c) flattening and/or extruding the dough, thereby obtaining a filo dough sheet;
(ii) stacking between 1 and 30 layers of filo dough sheets, preferably between 15 and 25 layers, while applying fat between each layer; thereby obtaining a stack of filo dough layers;
(iii) adding a savoury or sweet filling on top of a first stack of filo dough layers;
(iv) adding a second stack of filo dough layers on top of the savoury or sweet filing, thereby obtaining an aggregated stack of filo dough layers and filling;
(v) cutting the aggregated stack of filo dough layers and filling in pieces;
(vi) soaking the pieces in fat;
(vii) baking the pieces;
(viii) optionally soaking the baked pieces in sugar syrup, and
(ix) optionally packing the products.

The filling of the pastry may be sweet or savory, depending on the pastry type. Non-limiting example of fillings are nuts-based fillings (pistachio, peanut, cashew nut, walnuts, ...), cheese-based fillings, legumes-based fillings (spinach, pumpkin, pea, ...) and meat-based fillings.

The filling is generally inserted between two stacks of filo dough sheets. A stack of dough sheets may be prepared by carefully removing most of the dusting starch of a first dough sheet, applying a thin layer of fat on the first dough sheet, and superposing a second cleaned dough sheet on the first dough sheet. These steps are repeated up to obtain a stack of about 10 to 30 dough sheets, preferably of about 15 to 25 dough sheets, more preferably of about 20 dough sheets. The fat used between the dough sheets may be any type of animal or vegetable fat. Preferably, the fat is any type of animal or vegetal ghee or a combination thereof. More preferably, the fat is melted animal ghee. The fat may be applied using any suitable method such as brushing or spraying.

The combined dough sheets/filling, with the filling sandwiched between two stacks of filo dough sheets, also referred to as an aggregated stack of filo dough sheets or layers and filling, may be cut in smaller portions having any form (square, lozenge, triangle, ...). Cutting may be performed by hand with a sharp knife or with an automated cutter.

After shaping/cutting, the pieces are soaked in fat and left/subject to a resting step to absorb the fat. Preferably, the fat is animal or vegetable ghee or a combination thereof. More preferably, the fat is melted animal ghee.

After the fat soaking or fat absorption step, the pieces are baked, typically in a conventional deck oven using usual baking parameters. For example, the pieces are baked between 40 and 75 min at a temperature between 180 and 200°C).

In certain embodiments, after baking and subsequent cooling, the baked pieces may be soaked in a sugar syrup, such as, but not limited to, sucrose syrup, and thereafter drained to remove the excess sugar syrup. The skilled person will understand that the soaking step in sugar syrup is particularly suited for sweet filo dough based products such as, for example, baklava.

In some embodiments, the finished products may be packed in a suitable packaging.

The methods and compositions of the present invention allow to obtain finished products having improved properties over their full shelf life compared to conventionally obtained products. The products obtained by the methods of the present invention are crispier and have a softer mouth feel. They do not exhibit a tendency to become dry and/or soggy during storage: they maintain their crispiness and shiny character during the shelf life. In addition, the shininess of the product surface is improved. In particular, the filo dough based products obtained according to the present invention maintain their shiny appearance and crispiness for at least 21 days, as evaluated by a panel of professional experts in sensorial evaluation, particularly compared to a reference filo dough based product prepared without the one or more monoglycerides, the at least one protease enzyme and the at least one lipase enzyme. The present invention further provides for the use of a filo dough as specified elsewhere herein or the use of an improver composition as specified elsewhere herein, for the production of filo dough based products or filo dough based pastry, with improved appearance and properties.

**EXAMPLES**

**Example 1:**

*Enzyme activities determination*

The protease activity is measured on azurine crosslinked casein (AZCL-casein). This substrate is prepared by dyeing and crosslinking casein to produce a material which hydrates in water but is water-insoluble. Hydrolysis by proteases produces water soluble dyed fragments, and the rate of release of these (increase in absorbance at 590 nm) can be related directly to enzyme activity (Protazyme AK Tablets, Megazyme, Ireland). A protazyme AK tablet is incubated in 100 mM $Na_2HPO_4.2H_2O$; pH 7.0 at 60°C for 5 min. An aliquot of enzyme (1.0 ml) is added and the reaction is allowed to continue for exactly 10 min. The reaction is terminated by the addition of tri-sodium phosphate (10 ml, 2% w/v, pH 12.3). The tube stands for approx. 2 min at room temperature and the content is filtered. The absorbance of the filtrate is measured at 590 nm against a substrate blank.
The protease activity is expressed as:

$$mU(milliunits)/ml = (34.2 * (Abs_{590} \text{ enzyme} - Abs_{590} \text{ blank}) + 0.6) / dilution.$$

One unit or protease unit corresponds to 1000 mU.
The phospholipase activity is measured using 1,2-Dioleoyl-sn-glycero-3-phospho-rac-1-glycerol (DOPG) as substrate. The release of free fatty acid by phospholipase is measured by spectrophotometry at 550nm. $10\mu L$ of 1% DOPG substrate solution (dissolved in 0.1M Na-phosphate buffer at pH 7.5 containing 5% of Na-deoxycholate) are mixed with $10\mu L$ of enzyme sample and incubated at 30°C for 15min. Afterwards, $2\mu L$ of 1M orthophosphoric acid are added to stop the reaction. The released free fatty acid are measured using the kit NEFA-HR(2) kit from Fujifilm following the manufacturer instructions (addition of $200\mu L$ of reagent R1 and incubation at 37°C for 10 min; addition of $100\mu L$ of reagent R2 and incubation at 37°C for 10min . A calibration curve is established by use of different concentrations of oleic acid provided in the kit. The absorbance is measured at 550nm against a blank sample in 96-wells microplate.
One phospholipase activity unit or phospholipase unit (NefU) is defined as the amount of enzyme needed to release 1 nmol of free fatty acid per minute at 30°C pH7.5.

*Monoglycerides particle size determination*

The particle size is measured with a Lazer Diffractor LS 200 (Beckman Coulter) using the recommendations of the supplier.

*Monoglycerides iodine value determination*

The method is based on the official methods AOCS Cd 1-25 and AOAC 981.11 with some modifications.
A sample of about 1 g is weighed and melted at max.10 °C above the melting point of the fat. 15 ml of Carbon tetrachloride $CCl_4$ and 15 ml of diethyl ether are added.
A blank sample is prepared with the reagents but without the sample.
25.0 ml of Wijs solution is added to the sample in a flask, followed by shaking. The flasks are put in a dark environment for 1 hour. After this, 3 g of potassium iodide and 150 ml of water are added. The solution is then titrated with continuous shaking with a 0.1N sodium thiosulfate solution to a light-yellow colour. Starch indicator (soluble starch) is added and the titration is continued to the disappearance of the blue colour.
The Iodine value expressed in g $I_2$/ 100 g of product is equal to $((B-T)/P)*1.269$

where B is the amount of ml sodium thiosulfate for the blank,
T is the amount of ml sodium thiosulfate for the sample,
P is the weight of the sample in g,
1.269 is the molecular weight of iodine / 100.

**Example 2: Baklava**

*Enzymes:*

- TaProt: *Thermus aquaticus* Taq1 protease. (aqualysine I) as described in WO2009138447A1. The enzyme has an optimum of temperature activity of 80°C.
- VaLip: *Valsaria rubricosa* phospholipase A1 as described in WO2018150021A1.

*Monoglycerides*

- Multec mono 90 SH: distilled monoglycerides based on vegetable oil; mean particle size: 90 $\mu$m; iodine value (as $I_2$) between 0 and 2 g/100g (Puratos; Belgium);
- Multec mono MM 9202 spw: distilled monoglycerides based on vegetable oil; mean particle size: 270 $\mu$m; iodine value (as $I_2$) between 0 and 2 g/100g (Puratos; Belgium);
- DMG 5611: distilled monoglycerides based on vegetable fatty acids; mean particle size 200 $\mu$m; iodine value (as $I_2$) between 19 and 25 (Paalsgaard, Denmark)

*Preparation of the doughs*

Baklava doughs were prepared using the ingredients of Table 1.

Table 1

| in baker's % | BARef | BA1 | BA2 | BA3 | BA4 | BA5 | BA6 | BA7 | BA8 |
|---|---|---|---|---|---|---|---|---|---|
| Wheat flour (Jordan South Mills) (P/L: 0.9) | 100 | 100 | 100 | 100 | 100 | 100 | 100 | 100 | 100 |
| Water | 40 | 40 | 40 | 40 | 40 | 40 | 40 | 40 | 40 |
| Full fat milk powder | 8 | 8 | 8 | 8 | 8 | 8 | 8 | 8 | 8 |
| Fresh eggs | 5 | 5 | 5 | 5 | 5 | 5 | 5 | 5 | 5 |
| Salt | 3 | 3 | 3 | 3 | 3 | 3 | 3 | 3 | 3 |
| Vegetable ghee | 2.5 | 2.5 | 2.5 | 2.5 | 2.5 | 2.5 | 2.5 | 2.5 | 2.5 |
| Multec Mono 90 SH | | | | | | 1 | 0.4 | | |
| Multec Mono 9202 | | | | | | | | 0.4 | |
| DMG 5611 | | | | | | | | | 0.4 |
| Sodium metabisulfite | 0.02 | 0.02 | 0.02 | 0.02 | 0.02 | 0.02 | 0.02 | 0.02 | 0.02 |
| TaProt (protease units/100 kg flour) | | | 150 | | 300 | | 150 | 150 | 150 |
| VaLip (phospholipase units/100 kg flour) | | 7130 | | 35650 | | | 7130 | 7130 | 7130 |

*Process*

The ingredients were mixed using a spiral dough mixer for 5 min on a slow setting and 7 minutes on a fast setting. The dough is then transferred to a dough hopper and processed through a dough extruder into a thin layered sheet having a thickness of about 1 to 1.5 mm. Extrusion and dough processing into a sheet varies from 12 to 16 minutes. After the dough sheets pass through the extrusion line, they are dusted with native starch (from wheat or corn) and then rolled on itself into a jumbo roll. The starch dusting helps in avoiding the sticking of the layers on each other and thus allows the big jumbo roll of dough to be unrolled later and thus separate each sheet from the other after being stacked.

*Evaluation of the dough*

After preparation, the doughs rheology and the sheeting behaviour of the doughs were evaluated by visual examination and physical touch of the doughs by experts in Arabic sweets production. The results are shown in table 2.

Table 2

| | Dough rheology | Sheeting behaviour |
|---|---|---|
| **BARef** | Good, regular, acceptable smoothness | Good extrusion and good tenacity. |
| **BA1** | A bit stiffer than reference | Same as reference |
| **BA2** | More relaxed dough than ref | Dough tended to break too fast |
| **BA3** | Smooth & softer | Dough tended to break too fast |
| **BA4** | Stiffer | Same as reference |
| **BA5** | Same as reference | Not possible, dough breaks just after extrusion and loses cohesiveness |
| **BA6** | Same as reference | Same as reference |
| **BA7** | A bit stiffer than reference | Dough tended to break too fast |
| **BA8** | More relaxed dough | Not possible to process, dough breaks just after extrusion and loses cohesiveness |

These results show that not all combinations of enzymes and emulsifiers allow to obtain dough suitable for being processed into thin filo-type doughs.

*Preparation of the Baklavas*

The filo dough sheets were processed into Baklava products, by performing the following steps:

- Transfer the dough sheets to stainless steel or marble tables.
- Brush away the excess starch from between the dough layers.
- Stack in big aluminium trays 20 layers of thin dough sheets, with spraying of animal ghee between each layer.
- Spread a nut-based filling (made up of pistachios, sugar and rose water) on the surface of the dough sheets stack.
- Add another 20 layers sheets on top of the nut-based filling. The final assembly thus consist of the nut-based filling sandwiched between 20 dough layers below the filling (at the bottom of the assembly) and 20 dough layers covering the filling (at the top of the assembly).
- Cut with a with an automated cutter the shape of the baklava (small squares, big triangles etc) and place them on trays.
- Soak the trays with animal ghee.
- Leave the soaked trays for resting to absorb all the ghee.
- Bake the trays in a gas fired deck oven (45 min at 185 °C).
- After baking, let the trays cool until room temperature.
- Soak the baked Baklavas in a sucrose syrup for 60 minutes.
- Drain the Baklavas from excess syrup.
- Pack the Baklavas in boxes.

*Evaluation of the Baklavas*

Hardness

The texture of the Baklavas was evaluated after 21 days of storage with a Texture Analyser (TAXT2i, Stable Micro Systems) equipped with a cylinder probe SMS P/36R.
The hardness is the maximum force needed to apply a fixed deformation of 67.32% of the initial height of 40 mm.

Sensorial evaluation

The texture of the Baklavas was evaluated after 21 days of storage by a panel of professional used to taste Baklavas.
The results are presented in table 3. The results are expressed relative to the results of the reference that are set to 100.

Table 3

|  | Hardness | sensorial |
|---|---|---|
| BARef | 100 | Hard bite with soggy texture<br>Poor shininess after 21 days storage |
| BA1 | 52 | Much softer bite than reference |
| BA2 | 26 | Smooth and silky bite with melting properties |
| BA3 | 34 | Softer bite than reference and BA1 |
| BA4 | 23 | Smooth and silky with melting<br>Poor shininess after 21 days storage |
| BA5 | 43 | Soft dough and soft bite during shelf life |
| BA6 | 41 | Excellent softness and crispiness<br>Shiny appearance after 21 days storage |
| BA7 | 55 | Medium softness but better than reference |
| BA8* | NA |  |
| *BA8 dough broke before being processing and Baklawas could not be produced | | |

Among the thin filo-type doughs having a good rheology and sheeting behaviour (BARef, BA1, BA4 and BA6 - see table 2) the Baklavas made with BA6 were the best products in term of taste and appearance. Whereas the reference samples lost colour and became soggy after 21 days from production, sample BA6, which included a combination of saturated monoglycerides with small particle size, a thermophilic serine protease and a phospholipase, preserved its shiny look and crispy texture during storage for 21-28 days.

## Claims

1.   A method to obtain a filo dough sheet, wherein the method comprises the steps of:

(a) preparing a dough comprising

- flour, water,
- one or more monoglycerides, wherein the one or more monoglycerides have an iodine value lower or equal to 5.0, wherein the one or more monoglycerides are in powder form, and wherein at least 70.0% of said one or more monoglycerides have a particle size lower than 200 $\mu$m,
- at least one protease enzyme, wherein said protease enzyme is a thermophilic serine protease enzyme having an optimum activity at a temperature higher than 70.0°C,
- at least one lipase enzyme, wherein said lipase enzyme is a phospholipase enzyme,
- optionally oil,
- optionally eggs and/or milk powder, and,
- optionally one or more reducing agents;

(b) optionally resting the dough, and
(c) flattening and/or extruding the dough, thereby obtaining the filo dough sheet.

2.   The method according to claim 1, wherein at least 70.0% of said one or more monoglycerides have a particle size lower than 150 $\mu$m; and/or

wherein the at least one protease enzyme is a thermophilic serine protease enzyme having an optimum activity at a temperature higher than 75.0°C, preferably at a temperature higher than 80.0°C; and/or
wherein the at least one lipase enzyme is a phospholipase A enzyme, preferably a phospholipase A1 enzyme.

3.   The method according to claim 1 or 2, wherein the one-or more monoglycerides are present in the dough in an amount between 100 and 2000 g/100 kg flour; and/or wherein the thermophilic serine protease enzyme is present in the dough in an amount between 30 and 1000 protease units/100 kg flour; and/or wherein the phospholipase enzyme is present in the dough in an amount between 2300 and 60000 phospholipase units/100 kg flour, wherein the protease activity is measured on azurine crosslinked casein as substrate using the method described in example 1, and wherein the phospholipase activity is measured using 1,2-Dioleoyl-sn-glycero-3-phospho-rac-1-glycerol as substrate using the method described in example 1.

4. The method according to any one of claims 1 to 3, wherein the filo dough sheet has a thickness of between 0.5 to 2.5 mm, preferably between 0.5 and 2.0 mm.

5. The method according to any one of claims 1 to 4, wherein the method comprises the steps of

(a) preparing a dough, wherein the dough comprises, expressed on flour weight:

- 100 wt% flour, preferably flour having a P/L ratio between 0.5 and 3, even more preferably flour having a P/L ratio between 0.5 and 2, wherein the P/L ratio is determined with an alveograph test according to AACC International Method 54-30.1999 or ICC Standard No. 121.1992;
- 45.0-65.0 wt% water;
- one or more monoglycerides, wherein said monoglycerides are saturated monoglycerides in powder form, having an iodine value lower or equal to 5.0, and wherein at least 70.0% of the monoglycerides in powder form have a particle size between 50 and 200 $\mu$m, in an amount between 100 and 2000 g/100 kg flour;
- at least one protease enzyme, wherein said protease enzyme is a thermophilic serine protease enzyme having an optimum activity at a temperature higher than 70.0°C, in an amount between 30 and 1000 protease units/100 kg flour, wherein the protease activity is measured on azurine crosslinked casein as substrate using the method described in example 1;
- at least one lipase enzyme, wherein said lipase enzyme is a phospholipase enzyme, in an amount between 2300 and 60000 phospholipase units/100 kg flour, wherein the phospholipase activity is measured using 1,2-Dioleoyl-sn-glycero-3-phospho-rac-1-glycerol as substrate using the method described in example 1;
- optionally 0-5 wt% oil, particularly 2-5 wt% oil;
- optionally 0-10 wt% eggs and/or milk powder, particularly 4-10 wt% eggs and/or milk powder; and;
- optionally a reducing agent, wherein when said reducing agent is sodium metabisulphite, it is present in an amount between 1.0 and 10.0 g / 100 kg of flour, particularly between 2.5 and 5.0 g / 100 kg of flour, or when said reducing agent is deactivated yeast, it is present in an amount between 500 and 1500 g / 100 kg of flour;

(b) optionally resting the dough between 0 min and 16 hours or overnight, and
(c) flattening and/or extruding the dough, thereby obtaining a filo dough sheet with thickness between 0.5 and 2.5 mm.

6. A method to obtain a filo dough based baked product, comprising the steps of:

(i) preparing a filo dough sheet according to a method as defined in any one of claims 1 to 5;
(ii) stacking between 1 and 30 layers of filo dough sheets, preferably between 15 and 25 layers, while applying fat between each layer; thereby obtaining a stack of filo dough layers;
(iii) adding a savoury or sweet filling on top of a first stack of filo dough layers;
(iv) adding a second stack of filo dough layers on top of the savoury or sweet filing, thereby obtaining an aggregated stack of filo dough layers and filling;
(v) cutting the aggregated stack of filo dough layers and filling in pieces;
(vi) soaking the pieces in fat;
(vii) baking the pieces;
(viii) optionally soaking the baked pieces in sugar syrup, and
(ix) optionally packing the products.

7. The method according to claim 6, wherein the savoury or sweet filling is a nut based filling, a cheese based filling a legume/vegetable base filing or a meat based filling.

8. The method according to claim 6 or 7, wherein the filo dough based product is baklava.

9. The method according to any one of claims 6 to 8, wherein the method is a method for improving the crispiness of a filo dough based product, preferably baklava.

10. A filo dough sheet, particularly having a thickness between 0.5 and 2.5 mm, obtained by a method according to any one of claims 1 to 5, comprising

   - flour, water,
   - one or more monoglycerides, wherein the one or more monoglycerides have an iodine value lower or equal to 5.0, wherein the one or more monoglycerides are in powder form, and wherein at least 70% of said one or more monoglycerides have a particle size lower than 200 $\mu$m, such as between 50 and 200 $\mu$m;
   - at least one protease enzyme, wherein said protease enzyme is a thermophilic serine protease enzyme having an optimum activity at a temperature higher than 70.0°C,
   - at least one lipase enzyme, wherein said lipase enzyme is a phospholipase enzyme,
   - optionally oil,
   - optionally eggs and/or milk powder, and,
   - optionally one or more reducing agent.

11. The filo dough sheet according to claim 10, wherein the protease enzyme is a thermophilic serine protease enzyme having an optimum activity at a temperature higher than 75.0°C, preferably at a temperature higher than 80.0°C; and/or
   wherein the lipase enzyme is a phospholipase A enzyme, preferably a phospholipase A1 enzyme.

12. The filo dough sheet according to claim 10 or 11, wherein

   - the one or more monoglycerides are present in the dough in an amount between 100 and 2000 g/100 kg flour;
   - the at least one protease enzyme is present in the dough in an amount between 30.0 and 1000.0 protease units/100 kg flour, wherein the protease activity is measured on azurine crosslinked casein as substrate using the method described in example 1; and/or
   - the at least one lipase enzyme is present in the dough sheet in an amount between 2300 and 60000 phospholipase units/100 kg flour, wherein the phospholipase activity is measured using 1,2-Dioleoyl-sn-glycero-3-phospho-rac-1-glycerol as substrate using the method described in example 1.

13. An improver composition, in powder form, comprising:

   - one or more monoglycerides, wherein said monoglycerides are saturated monoglycerides in powder form, having an iodine value lower or equal to 5, and wherein at least 70% of the monoglycerides in powder form have a particle size between 50 and 200 $\mu$m;
   - at least one protease enzyme; wherein said protease enzyme is a thermophilic serine protease enzyme having an optimum activity at a temperature higher than 70.0°C;
   - at least one lipase enzyme, wherein said lipase enzyme is a phospholipase enzyme;
   wherein the protease enzyme is present in the improver composition in an amount between 0.01 and 10.0 protease units per g of said one or more monoglycerides; and
   wherein the lipase enzyme is present in the improver composition in an amount between 1 and 600 phospholipase units per g of said one or more monoglycerides;
   wherein the protease activity is measured on azurine crosslinked casein as substrate using the method described in example 1 and wherein the phospholipase activity is measured using 1,2-Dioleoyl-sn-glycero-3-phospho-rac-1-glycerol as substrate using the method described in example 1.

14. The improver composition according to claim 13, wherein the protease enzyme is a thermophilic serine protease enzyme having an optimum activity at a temperature higher than 75.0°C, preferably at a temperature higher than 80.0°C; and/or
   wherein the lipase enzyme is a phospholipase A enzyme, preferably a phospholipase A1 enzyme.

15. Use of the dough sheet according to any one of claims 10 to 12, or use of the improver composition according to claim 13 or 14, for the preparation of filo dough based products, particularly for the preparation of filo dough based products which maintain their appearance and crispiness for at least 21 days, as evaluated by a panel of professional experts in sensorial evaluation.

**Patentansprüche**

1. Verfahren zum Erhalten eines Filoteigblatts, wobei das Verfahren die folgenden Schritte umfasst:

   (a) Zubereiten eines Teigs, umfassend

   - Mehl, Wasser,
   - ein oder mehrere Monoglyceride, wobei das eine oder die mehreren Monoglyceride eine Iodzahl von kleiner oder gleich 5,0 aufweisen, wobei das eine oder die mehreren Monoglyceride in Pulverform vorliegen, und wobei mindestens 70,0 % des einen oder der mehreren Monoglyceride eine Partikelgröße von kleiner als 200 μm aufweisen,
   - mindestens ein Proteaseenzym, wobei das Proteaseenzym ein thermophiles Serinproteaseenzym ist, das eine optimale Aktivität bei einer Temperatur von höher als 70,0 °C aufweist,
   - mindestens ein Lipaseenzym, wobei das Lipaseenzym ein Phospholipaseenzym ist,
   - gegebenenfalls Öl,
   - gegebenenfalls Eier und/oder Milchpulver, und,
   - gegebenenfalls ein oder mehrere Reduktionsmittel;

   (b) gegebenenfalls Ruhen des Teigs, und
   (c) Abflachen und/oder Extrudieren des Teigs, wodurch das Filoteigblatt erhalten wird.

2. Verfahren nach Anspruch 1, wobei mindestens 70,0 % des einen oder der mehreren Monoglyceride eine Partikelgröße von kleiner als 150 μm aufweisen; und/oder

   wobei das mindestens eine Proteaseenzym ein thermophiles Serinproteaseenzym ist, das eine optimale Aktivität bei einer Temperatur von höher als 75,0 °C aufweist, vorzugsweise bei einer Temperatur von höher als 80,0 °C; und/oder
   wobei das mindestens eine Lipaseenzym ein Phospholipase-A-Enzym ist, vorzugsweise ein Phospholipase-A1-Enzym.

3. Verfahren nach Anspruch 1 oder 2, wobei das eine oder die mehreren Monoglyceride in dem Teig in einer Menge zwischen 100 und 2000 g/100 kg Mehl vorhanden sind; und/oder wobei das thermophile Serinproteaseenzym in dem Teig in einer Menge zwischen 30 und 1000 Proteaseeinheiten/100 kg Mehl vorhanden ist; und/oder wobei das Phospholipaseenzym in dem Teig in einer Menge zwischen 2300 und 60000 Phospholipaseeinheiten/100 kg Mehl vorhanden ist, wobei die Proteaseaktivität an azurinvernetztem Casein als Substrat unter Verwendung des in Beispiel 1 beschriebenen Verfahrens gemessen wird, und wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird.

4. Verfahren nach einem der Ansprüche 1 bis 3, wobei das Filoteigblatt eine Dicke zwischen 0,5 und 2,5 mm aufweist, vorzugsweise zwischen 0,5 und 2,0 mm.

5. Verfahren nach einem der Ansprüche 1 bis 4, wobei das Verfahren die folgenden Schritte umfasst:

   (a) Zubereiten eines Teigs, wobei der Teig, ausgedrückt auf Mehlgewicht, umfasst:

   - 100 Gew.-% Mehl, vorzugsweise Mehl mit einem P/L-Verhältnis zwischen 0,5 und 3, noch bevorzugter Mehl mit einem P/L-Verhältnis zwischen 0,5 und 2, wobei das P/L-Verhältnis mit einem Alveographentest gemäß AACC International Method 54-30.1999 oder ICC Standard Nr. 121.1992 bestimmt wird;
   - 45,0-65,0 Gew.-% Wasser;
   - ein oder mehrere Monoglyceride, wobei die Monoglyceride gesättigte Monoglyceride in Pulverform sind, die eine Iodzahl von kleiner oder gleich 5,0 aufweisen, und wobei mindestens 70,0 % der Monoglyceride in Pulverform eine Partikelgröße zwischen 50 und 200 μm aufweisen, in einer Menge zwischen 100 und 2000 g/100 kg Mehl;
   - mindestens ein Proteaseenzym, wobei das Proteaseenzym ein thermophiles Serinproteaseenzym ist, das eine optimale Aktivität bei einer Temperatur von höher als 70,0 °C aufweist, in einer Menge zwischen 30 und 1000 Proteaseeinheiten/100 kg Mehl, wobei die Proteaseaktivität an azurinvernetztem Casein als Substrat unter Verwendung des in Beispiel 1 beschriebenen Verfahrens gemessen wird;

- mindestens ein Lipaseenzym, wobei das Lipaseenzym ein Phospholipaseenzym ist, in einer Menge zwischen 2300 und 60000 Phospholipaseeinheiten/100 kg Mehl, wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird;
- gegebenenfalls 0-5 Gew.-% Öl, insbesondere 2-5 Gew.-% Öl;
- gegebenenfalls 0-10 Gew.-% Eier und/oder Milchpulver, insbesondere 4-10 Gew.-% Eier und/oder Milchpulver; und;
- gegebenenfalls ein Reduktionsmittel, wobei, wenn das Reduktionsmittel Natriummetabisulfit ist, es in einer Menge zwischen 1,0 und 10,0 g / 100 kg Mehl vorhanden ist, insbesondere zwischen 2,5 und 5,0 g / 100 kg Mehl, oder wenn das Reduktionsmittel deaktivierte Hefe ist, es in einer Menge zwischen 500 und 1500 g / 100 kg Mehl vorhanden ist;

(b) gegebenenfalls Ruhen des Teigs zwischen 0 min und 16 Stunden oder über Nacht, und
(c) Abflachen und/oder Extrudieren des Teigs, wodurch ein Filoteigblatt mit einer Dicke zwischen 0,5 und 2,5 mm erhalten wird.

6. Verfahren zum Erhalten einer Filoteigbackware, umfassend die folgenden Schritte:

(i) Zubereiten eines Filoteigblatts gemäß einem Verfahren, wie in einem der Ansprüche 1 bis 5 definiert;
(ii) Stapeln von zwischen 1 und 30 Schichten von Filoteigblättern, vorzugsweise zwischen 15 und 25 Schichten, wobei Fett zwischen jeder Schicht angewendet wird; wodurch ein Stapel von Filoteigschichten erhalten wird;
(iii) Hinzufügen einer herzhaften oder süßen Füllung auf einen ersten Stapel von Filoteigschichten;
(iv) Hinzufügen eines zweiten Stapels von Filoteigschichten auf die herzhafte oder süße Füllung, wodurch ein aggregierter Stapel von Filoteigschichten und Füllung erhalten wird;
(v) Schneiden des aggregierten Stapels von Filoteigschichten und Füllung in Stücke;
(vi) Tränken der Stücke in Fett;
(vii) Backen der Stücke;
(viii) gegebenenfalls Tränken der gebackenen Stücke in Zuckersirup, und
(ix) gegebenenfalls Verpacken der Produkte.

7. Verfahren nach Anspruch 6, wobei die herzhafte oder süße Füllung eine Nussfüllung, eine Käsefüllung, eine Hülsenfrucht-/Gemüsefüllung oder eine Fleischfüllung ist.

8. Verfahren nach Anspruch 6 oder 7, wobei das Filoteigprodukt Baklava ist.

9. Verfahren nach einem der Ansprüche 6 bis 8, wobei das Verfahren ein Verfahren zum Verbessern der Knusprigkeit eines Filoteigprodukts, vorzugsweise Baklava, ist.

10. Filoteigblatt, insbesondere eine Dicke zwischen 0,5 und 2,5 mm aufweisend, erhalten durch ein Verfahren nach einem der Ansprüche 1 bis 5, umfassend

- Mehl, Wasser,
- ein oder mehrere Monoglyceride, wobei das eine oder die mehreren Monoglyceride eine Iodzahl niedriger oder gleich 5,0 aufweisen, wobei das eine oder die mehreren Monoglyceride in Pulverform vorliegen, und wobei mindestens 70 % des einen oder der mehreren Monoglyceride eine Partikelgröße niedriger als 200 $\mu$m aufweisen, wie beispielsweise zwischen 50 und 200 $\mu$m;
- mindestens ein Proteaseenzym, wobei das Proteaseenzym ein thermophiles Serinproteaseenzym ist, das eine optimale Aktivität bei einer Temperatur höher als 70,0 °C aufweist,
- mindestens ein Lipaseenzym, wobei das Lipaseenzym ein Phospholipaseenzym ist,
- gegebenenfalls Öl,
- gegebenenfalls Eier und/oder Milchpulver, und,
- gegebenenfalls ein oder mehrere Reduktionsmittel.

11. Filoteigblatt nach Anspruch 10, wobei das Proteaseenzym ein thermophiles Serinproteaseenzym ist, das eine optimale Aktivität bei einer Temperatur höher als 75,0 °C, vorzugsweise bei einer Temperatur höher als 80,0 °C aufweist; und/oder
wobei das Lipaseenzym ein Phospholipase-A-Enzym, vorzugsweise ein Phospholipase-A1-Enzym ist.

12. Filoteigblatt nach Anspruch 10 oder 11, wobei

- das eine oder die mehreren Monoglyceride in dem Teig in einer Menge zwischen 100 und 2000 g/100 kg Mehl vorhanden sind;
- das mindestens eine Proteaseenzym in dem Teig in einer Menge zwischen 30,0 und 1000,0 Proteaseeinheiten/100 kg Mehl vorhanden ist, wobei die Proteaseaktivität an azurinvernetztem Casein als Substrat unter Verwendung des in Beispiel 1 beschriebenen Verfahrens gemessen wird; und/oder
- das mindestens eine Lipaseenzym in dem Teigblatt in einer Menge zwischen 2300 und 60000 Phospholipaseeinheiten/100 kg Mehl vorhanden ist, wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird.

13. Verbessererzusammensetzung, in Pulverform, umfassend:

- ein oder mehrere Monoglyceride, wobei die Monoglyceride gesättigte Monoglyceride in Pulverform sind, die eine Iodzahl niedriger oder gleich 5 aufweisen, und wobei mindestens 70 % der Monoglyceride in Pulverform eine Partikelgröße zwischen 50 und 200 $\mu$m aufweisen;
- mindestens ein Proteaseenzym; wobei das Proteaseenzym ein thermophiles Serinproteaseenzym ist, das eine optimale Aktivität bei einer Temperatur höher als 70,0 °C aufweist;
- mindestens ein Lipaseenzym, wobei das Lipaseenzym ein Phospholipaseenzym ist;
wobei das Proteaseenzym in der Verbessererzusammensetzung in einer Menge zwischen 0,01 und 10,0 Proteaseeinheiten pro g des einen oder der mehreren Monoglyceride vorhanden ist; und
wobei das Lipaseenzym in der Verbessererzusammensetzung in einer Menge zwischen 1 und 600 Phospholipaseeinheiten pro g des einen oder der mehreren Monoglyceride vorhanden ist;
wobei die Proteaseaktivität an azurinvernetztem Casein als Substrat unter Verwendung des in Beispiel 1 beschriebenen Verfahrens gemessen wird und wobei die Phospholipaseaktivität unter Verwendung von 1,2-Dioleoyl-sn-glycero-3-phospho-rac-1-glycerol als Substrat unter Verwendung des in Beispiel 1 beschriebenen Verfahrens gemessen wird.

14. Verbessererzusammensetzung nach Anspruch 13, wobei das Proteaseenzym ein thermophiles Serinproteaseenzym ist, das eine optimale Aktivität bei einer Temperatur höher als 75,0 °C, vorzugsweise bei einer Temperatur höher als 80,0 °C aufweist; und/oder
wobei das Lipaseenzym ein Phospholipase-A-Enzym, vorzugsweise ein Phospholipase-A1-Enzym ist.

15. Verwendung des Teigblatts nach einem der Ansprüche 10 bis 12 oder Verwendung der Verbessererzusammensetzung nach Anspruch 13 oder 14 für die Zubereitung von Filoteigprodukten, insbesondere für die Zubereitung von Filoteigprodukten, die ihr Erscheinungsbild und ihre Knusprigkeit für mindestens 21 Tage beibehalten, wie durch ein Paneel professioneller Experten in sensorischer Bewertung bewertet.

**Revendications**

1. Procédé d'obtention d'une feuille de pâte filo, dans lequel le procédé comprend les étapes suivantes :

(a) la préparation d'une pâte comprenant

- de la farine, de l'eau,
- un ou plusieurs monoglycérides, dans lequel les un ou plusieurs monoglycérides ont un indice d'iode inférieur ou égal à 5,0, dans lequel les un ou plusieurs monoglycérides sont sous forme de poudre, et dans lequel au moins 70,0 % desdits un ou plusieurs monoglycérides ont une taille de particules inférieure à 200 $\mu$m,
- au moins une enzyme protéase, dans lequel ladite enzyme protéase est une enzyme sérine protéase thermophile ayant une activité optimale à une température supérieure à 70,0 °C,
- au moins une enzyme lipase, dans lequel ladite enzyme lipase est une enzyme phospholipase,
- éventuellement de l'huile,
- éventuellement des œufs et/ou du lait en poudre, et,
- éventuellement un ou plusieurs agents réducteurs ;

(b) éventuellement le repos de la pâte, et

(c) l'aplatissement et/ou l'extrusion de la pâte, obtenant ainsi la feuille de pâte filo.

2. Procédé selon la revendication 1, dans lequel au moins 70,0 % desdits un ou plusieurs monoglycérides ont une taille de particules inférieure à 150 μm ; et/ou

dans lequel l'au moins une enzyme protéase est une enzyme sérine protéase thermophile ayant une activité optimale à une température supérieure à 75,0 °C, de préférence à une température supérieure à 80,0 °C ; et/ou dans lequel l'au moins une enzyme lipase est une enzyme phospholipase A, de préférence une enzyme phospholipase A1.

3. Procédé selon la revendication 1 ou 2, dans lequel les un ou plusieurs monoglycérides sont présents dans la pâte en une quantité comprise entre 100 et 2 000 g/100 kg de farine ; et/ou dans lequel l'au moins une enzyme sérine protéase thermophile est présente dans la pâte en une quantité comprise entre 30 et 1 000 unités de protéase/100 kg de farine ; et/ou dans lequel l'au moins une enzyme phospholipase est présente dans la pâte en une quantité comprise entre 2 300 et 60 000 unités de phospholipase/100 kg de farine ; dans lequel l'activité protéase est mesurée sur de la caséine réticulée à l'azurine comme substrat à l'aide du procédé décrit dans l'exemple 1 et dans lequel l'activité phospholipase est mesurée à l'aide du 1,2-dioléoyl-sn-glycéro-3-phospho-rac-1-glycérol comme substrat à l'aide du procédé décrit dans l'exemple 1.

4. Procédé selon l'une quelconque des revendications 1 à 3, dans lequel la feuille de pâte filo a une épaisseur comprise entre 0,5 et 2,5 mm, de préférence entre 0,5 et 2,0 mm.

5. Procédé selon l'une quelconque des revendications 1 à 4, dans lequel le procédé comprend les étapes suivantes

(a) la préparation d'une pâte, dans lequel la pâte comprend, exprimée en poids de farine :

- 100 % en poids de farine, de préférence une farine ayant un rapport P/L compris entre 0,5 et 3, de manière davantage préférée encore une farine ayant un rapport P/L compris entre 0,5 et 2, dans lequel le rapport P/L est déterminé par un test alvéographique selon la méthode internationale AACC 54-30.1999 ou la norme ICC n° 121.1992 ;
- 45,0 à 65,0 % en poids d'eau ;
- un ou plusieurs monoglycérides, dans lequel lesdits monoglycérides sont des monoglycérides saturés sous forme de poudre, ayant un indice d'iode inférieur ou égal à 5,0, et dans lequel au moins 70,0 % des monoglycérides sous forme de poudre ont une taille de particules comprise entre 50 et 200 μm, en une quantité comprise entre 100 et 2 000 g/100 kg de farine ;
- au moins une enzyme protéase, dans lequel ladite enzyme protéase est une enzyme sérine protéase thermophile ayant une activité optimale à une température supérieure à 70,0 °C, en une quantité comprise entre 30 et 1 000 unités de protéase/100 kg de farine, dans lequel l'activité protéase est mesurée sur de la caséine réticulée à l'azurine comme substrat à l'aide du procédé décrit dans l'exemple 1 ;
- au moins une enzyme lipase, dans lequel ladite enzyme lipase est une enzyme phospholipase, en une quantité comprise entre 2 300 et 60 000 unités de phospholipase/100 kg de farine, dans lequel l'activité phospholipase est mesurée à l'aide du 1,2-dioléoyl-sn-glycéro-3-phospho-rac-1-glycérol comme substrat à l'aide du procédé décrit dans l'exemple 1 ;
- éventuellement 0 à 5 % en poids d'huile, en particulier 2 à 5 % en poids d'huile ;
- éventuellement 0 à 10 % en poids d'œufs et/ou de lait en poudre, en particulier 4 à 10 % en poids d'œufs et/ou de lait en poudre ; et ;
- éventuellement un agent réducteur, dans lequel, lorsque ledit agent réducteur est le métabisulfite de sodium, il est présent en une quantité comprise entre 1,0 et 10,0 g/100 kg de farine, en particulier entre 2,5 et 5,0 g/100 kg de farine, ou lorsque ledit agent réducteur est la levure désactivée, il est présent en une quantité comprise entre 500 et 1 500 g/100 kg de farine ;

(b) éventuellement le repos de la pâte entre 0 min et 16 heures toute la nuit, et

(c) l'aplatissement et/ou l'extrusion de la pâte, obtenant ainsi une feuille de pâte filo avec une épaisseur comprise entre 0,5 et 2,5 mm.

6. Procédé d'obtention d'un produit cuit à base de pâte filo, comprenant les étapes suivantes :

(i) la préparation d'une feuille de pâte filo selon un procédé tel que défini dans l'une quelconque des revendications 1 à 5 ;
(ii) l'empilement de 1 à 30 couches de feuilles de pâte filo, de préférence de 15 à 25 couches, tout en appliquant de la matière grasse entre chaque couche ; obtenant ainsi une pile de couches de pâte filo ;
(iii) l'ajout d'une garniture salée ou sucrée sur une première pile de couches de pâte filo ;
(iv) l'ajout d'une seconde pile de couches de pâte filo sur la garniture salée ou sucrée, obtenant ainsi une pile agrégée de couches de pâte filo et de garniture ;
(v) la découpe de la pile agrégée de couches de pâte filo et de garniture en morceaux ;
(vi) le trempage des morceaux dans de la matière grasse ;
(vii) la cuisson des morceaux ;
(viii) éventuellement le trempage des morceaux cuits dans un sirop de sucre, et
(ix) éventuellement l'emballage des produits.

7. Procédé selon la revendication 6, dans lequel la garniture salée ou sucrée est une garniture à base de noix, une garniture à base de fromage, une garniture à base de légumineuses/légumes ou une garniture à base de viande.

8. Procédé selon la revendication 6 ou 7, dans lequel le produit à base de pâte filo est un baklava.

9. Procédé selon l'une quelconque des revendications 6 à 8, dans lequel le procédé est un procédé pour améliorer le croustillant d'un produit à base de pâte filo, de préférence un baklava.

10. Feuille de pâte filo, en particulier ayant une épaisseur comprise entre 0,5 et 2,5 mm, obtenue par un procédé selon l'une quelconque des revendications 1 à 5, comprenant

 - de la farine, de l'eau,
 - un ou plusieurs monoglycérides, dans laquelle les un ou plusieurs monoglycérides ont un indice d'iode inférieur ou égal à 5,0, dans laquelle les un ou plusieurs monoglycérides sont sous forme de poudre, et dans laquelle au moins 70 % desdits un ou plusieurs monoglycérides ont une taille de particules inférieure à 200 $\mu$m, par exemple comprise entre 50 et 200 $\mu$m ;
 - au moins une enzyme protéase, dans laquelle ladite enzyme protéase est une enzyme sérine protéase thermophile ayant une activité optimale à une température supérieure à 70,0 °C,
 - au moins une enzyme lipase, dans laquelle ladite enzyme lipase est une enzyme phospholipase,
 - éventuellement de l'huile,
 - éventuellement des œufs et/ou du lait en poudre, et,
 - éventuellement un ou plusieurs agents réducteurs.

11. Feuille de pâte filo selon la revendication 10, dans laquelle l'au moins une enzyme protéase est une enzyme sérine protéase thermophile ayant une activité optimale à une température supérieure à 75,0 °C, de préférence à une température supérieure à 80,0 °C ; et/ou
dans laquelle l'enzyme lipase est une enzyme phospholipase A, de préférence une enzyme phospholipase A1.

12. Feuille de pâte filo selon la revendication 10 ou 11, dans laquelle

 - les un ou plusieurs monoglycérides sont présents dans la pâte en une quantité comprise entre 100 et 2 000 g/100 kg de farine ;
 - l'au moins une enzyme protéase est présente dans la pâte en une quantité comprise entre 30,0 et 1 000,0 unités de protéase/100 kg de farine, dans laquelle l'activité protéase est mesurée sur de la caséine réticulée à l'azurine comme substrat à l'aide du procédé décrit dans l'exemple 1 ; et/ou
 - l'au moins une enzyme lipase est présente dans la feuille de pâte en une quantité comprise entre 2 300 et 60 000 unités de phospholipase/100 kg de farine, dans laquelle l'activité phospholipase est mesurée à l'aide du 1,2-dioléoyl-sn-glycéro-3-phospho-rac-1-glycérol comme substrat à l'aide du procédé décrit dans l'exemple 1.

13. Composition améliorante sous forme de poudre, comprenant :

 - un ou plusieurs monoglycérides, dans laquelle lesdits monoglycérides sont des monoglycérides saturés sous forme de poudre, ayant un indice d'iode inférieur ou égal à 5, et dans laquelle au moins 70 % des monoglycérides sous forme de poudre ont une taille de particules comprise entre 50 et 200 $\mu$m ;
 - au moins une enzyme protéase ; dans laquelle ladite enzyme protéase est une enzyme sérine protéase thermophile ayant une activité optimale à une température supérieure à 70,0 °C ;
- au moins une enzyme lipase, dans laquelle ladite enzyme lipase est une enzyme phospholipase ;

dans laquelle l'enzyme protéase est présente dans la composition améliorante en une quantité comprise entre 0,01 et 10,0 unités de protéase par gramme desdits un ou plusieurs monoglycérides ; et
dans laquelle l'enzyme lipase est présente dans la composition améliorante en une quantité comprise entre 1 et 600 unités de phospholipase par gramme desdits un ou plusieurs monoglycérides ;
dans laquelle l'activité protéase est mesurée sur de la caséine réticulée à l'azurine comme substrat à l'aide du procédé décrit dans l'exemple 1 et dans laquelle l'activité phospholipase est mesurée à l'aide du 1,2-dioléoyl-sn-glycéro-3-phospho-rac-1-glycérol comme substrat à l'aide du procédé décrit dans l'exemple 1.

14. Composition améliorante selon la revendication 13, dans laquelle l'au moins une enzyme protéase est une enzyme sérine protéase thermophile ayant une activité optimale à une température supérieure à 75,0 °C, de préférence à une température supérieure à 80,0 °C ; et/ou
dans laquelle l'enzyme lipase est une enzyme phospholipase A, de préférence une enzyme phospholipase A1.

15. Utilisation de la feuille de pâte selon l'une quelconque des revendications 10 à 12, ou utilisation de la composition améliorante selon la revendication 13 ou 14, pour la préparation de produits à base de pâte filo, en particulier pour la préparation de produits à base de pâte filo qui conservent leur aspect et leur croustillant pendant au moins 21 jours, comme évalué par un panel d'experts professionnels en évaluation sensorielle.

**EP 4 648 615 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018011118 A1
- WO 2009138447 A1
- WO 2018150021 A1